(19) Europäisches Patentamt
European Patent Office
Office européen des brevets

(11) Publication number: 0 246 875 A2

# (12) EUROPEAN PATENT APPLICATION

(21) Application number: 87304475.4

(22) Date of filing: 20.05.87

(51) Int. Cl.⁴: C 08 G 75/14

(30) Priority: 21.05.86 GB 8612401

(43) Date of publication of application: 25.11.87 Bulletin 87/48

(84) Designated Contracting States: BE DE FR GB IT NL

(71) Applicant: EVODE LIMITED
Common Road
Stafford, ST16 3EH (GB)

(72) Inventor: Whitehouse, Robert Sydney
174, Doxey
Stafford, ST16 1EQ (GB)

(74) Representative: Lishman, Peter David
Aston Farm House Newtown Lane Shustoke
Coleshill Warwickshire B46 2SD (GB)

## (54) Liquid polymers.

(57) A modified liquid polymer is produced by reacting in the presence of a catalyst at least one mercaptan-terminated liquid polymer having functional linkages in the backbone with an amount below stoichiometry of at least one multi-functional cross-linking agent having mean or average functionality greater than 2. The amount of the cross-linking agent(s) is calculated by stoichiometry such that between 1 and 60 per cent of the mercaptan groups, preferably between 3 and 30 per cent, of the original liquid polymer or polymers are reacted. The multi-functional cross-linking agent may be a polyfunctional isocyanate-terminated polymer or a polymer having oxirane ring functionality such as a polyfunctional epoxide resin. Modified liquid polymers produced by the method retain cross-linkable mercaptan terminations and when cross-linked display improved mechanical properties and are useful for example in adhesives, sealants, coatings, extrusions and mouldings.

EP 0 246 875 A2

**Description**

# LIQUID POLYMERS

Liquid polymers have many applications in industry, for example in sealants, adhesives and moulding compounds. Prominent amongst these liquid polymers are the liquid polysulphides.

Polysulphides are commercially available as solid rubbers, having average molar masses ranging upwardly from about 50,000 and as liquids, having average molar masses in the range from about 1,000 to 8,000. The high molar mass solid rubber forms are prepared as aqueous suspensions by condensation between dihalide monomers and sodium polysulphide. They can be reduced by reaction with sodium hydrogen sulphide and sodium hydrogen sulphite to produce the liquid forms. Details of these reactions are given in a paper by A.M. Usmani in "Polymer News", 1985, Volume 10, Number 8, pages 231 to 236.

The average structure of the liquid polymers produced by such reactions is :
$HS\text{-}(C_2H_4\text{-}O\text{-}CH_2\text{-}O\text{-}C_2H_4\text{-}S\text{-}S\text{-})_n\text{-}C_2H_4\text{-}O\text{-}CH_2\text{-}C_2H_4SH$
This type of polymer has terminal mercaptan (or thiol) groups but also has disulphide linkages within the backbone. Examples of polymers having this general structure are sold under the Trade Mark "LP" by Thiokol Chemicals and Morton Thiokol Inc. In these commercially-available polymers, a small quantity of crosslinking monomer, usually 1,2,3 trichloropropane, is added, usually in the range 0.5 to 2 per cent, although concentrations up to 5 per cent have been reported.

Other liquid mercaptan-terminated polymers having functional linkages in the backbone are known. Examples are "PM Polymer", sold by Phillips Petroleum, "Perhaps PRC", sold by Elf Aquitaine and "Baythiol", sold by Bayer AG. These polymers differ from the liquid polysulphides by the structure of the backbone. In PM Polymer the backbone is based on a condensate of polyethylene oxide and propylene oxide. Permapol PRC has a urethane backbone.

This invention concerns the modification of liquid mercaptan-terminated polymers having functional linkages in the backbone, such as the liquid polysulphides and the other liquid polymers mentioned in the two preceding paragraphs, which will, for convenience, be referred to herein as "liquid polymers of the kind described".

The terminal mercaptan groups of liquid polymers of the kind described are easily cross-linkable by means of epoxide resins, inorganic or organic oxidizing agents or isocyanates. The exact mechanism of the reactions is not fully understood, but their results may be expressed as follows :

```
             O                                  OH
            / \                                /
RSH  +  CH2-CH2-R'   --->  R-S-CH2-CH2-R'


    2RSH  +  [O]  --->  R-S-S-R  +  H2O


                                   O
                                   ||
    RSH  +  R'NCO  --->  R'-NH-C-S-R
```

Liquid polymers of the kind described, crosslinked by the mercaptan terminations, are widely used for the purposes mentioned, but they suffer from low cohesive strength. Those whose structure includes disulphide linkages also display poor creep resistance. The low cohesive strength is due to the low level of chain branching (about 0.5 to 2 per cent in the liquid polysulphides). The poor creep resistance is due to cleaving of the functional linkages in the backbone, which reform under mechanical stress into a lower thermodynamically stable environment, relieving internal stresses. Modification by means of this invention provides polymers with improved properties.

According to the invention a method of producing a modified liquid polymer is characterised by reacting in the presence of a catalyst a liquid component comprising at least one liquid polymer of the kind described with an amount below stoichiometry of a cross-linking component comprising at least one multi-functional cross-linking agent having average functionality greater than 2.

The method produces a new polyfunctional liquid polymer or a mixture of new polyfunctional liquid polymers in a blend with the original liquid polymer or polymers. The functionality of the new polyfunctional liquid polymer(s) is determined by the choice of the cross-linking agent(s) and the amount used in the reaction. Preferably the amount of the cross-linking agent(s) is such that between 1 and 60 per cent of the mercaptan groups of the original liquid polymer or polymers which formed the liquid polymer component are reacted. Particularly useful new polyfunctional liquid polymers are produced by using an amount of the cross-linking component such that between 3 and 30 per cent of the mercaptan groups are reacted. The new polyfunctional

The components were mixed with a high speed stirrer to form a uniform paste.
"Santiciser", "Robac", "Araldite" and "Desmodur" are Trade Marks.

## Claims

1. Method of producing a modified liquid polymer characterised by reacting in the presence of a catalyst a liquid polymer component comprising at least one mercaptan-terminated liquid polymer having functional linkages in the backbone with an amount below stoichiometry of a cross-linking component comprising at least one multi-functional cross-linking agent having average functionality greater than 2.

2. Method as claimed in Claim 1 characterised in that the amount of the cross-linking component, calculated by stoichiometry, is such that between 1 and 60 per cent of the mercaptan groups of the liquid polymer component are reacted.

3. Method as claimed in Claim 2 characterised in that the amount of the cross-linking component, calculated by stoichiometry, is such that between 3 and 30 per cent of the mercaptan groups of the liquid polymer component are reacted.

4. Method as claimed in any of Claims 1 to 3, characterised in that the said at least one multi-functional cross-linking agent is a polyfunctional isocyanate-terminated polymer or a polymer having oxirane ring functionality such as a polyfunctional epoxide resin.

5. Method as claimed in any preceding claim in which the catalyst is an organic amine.

6. Method as claimed in any preceding claim, characterised by the steps of blending the liquid polymer component and the cross-linking component together, with heat if necessary to obtain an intimate mixture, adding the catalyst and further blending.

7. A modified liquid polymer produced by the method of any preceding claim.

8. Method as claimed in any of claims 1 to 6 including the further steps of allowing the mixture to stand until cross-linking is completed and adding a curing agent to the modified liquid polymer to promote cross-linking between the modified liquid polymer and the remaining liquid polymer component.

9. A new cross-linked polymer produced by cross-linking a modified liquid polymer as claimed in Claim 7.

10. An industrial composition including a new cross-linked polymer as claimed in Claim 9.

liquid polymer or polymers thus retain a proportion of the mercaptan terminations which are characteristic of liquid polymers of the kind described, so they are cross-linkable as described above by reaction with epoxide resins, inorganic or organic oxidising agents or isocyanates to produce new cross-linked polymers. These new cross-linked polymers are useful, either alone or in industrial compositions when blended with suitable fillers, plasticisers, pigments and/or fibres as adhesives, sealants, coatings for example for metal or concrete, production of extrusions and mouldings such as hoses, gaskets and seals, potting and encapsulation of mechanical or electrical components, fabric coatings and for other purposes.

Examples of multi-functional cross-linking agents suitable for use in the cross-linking component are polyfunctional isocyanate-terminated polymers and polymers having oxirane ring functionality such as polyfunctional epoxide resins.

Suitable catalysts are organic amines, for example those mentioned in the aforementioned paper by Usmani.

In performing the method the components are first blended together, with heat if necessary to obtain an intimate mixture, and the catalyst is then added and mixed in. A time (about two hours) is then allowed for the cross-linking reaction to proceed to completion. Completion has occurred when the cross-linking groups (e.g. oxirane or isocyanate) are no loger present. This can be detected by conventional analytical techniques.

The following examples illustrate improved mechanical properties obtained by reacting the liquid polysulphide LP 33 sold by Thiokol Chemicals and Morton Thiokol Inc. respectively with varying amounts of the epoxide resin Araldite MY 720, sold by Ciba Geigy, and the polymeric m.d.i. Desmodur VL, sold by Bayer AG (which has functionality approximately 2.6). In each case, after producing the blend of new polyfunctional liquid polysulphide with the original polysulphide as described above, the amine catalyst Anchor K54 (Anchor Chemicals) was added in the proportion of 10 parts per hundred dry weight of epoxide resin or isocyanate and the mixture was further stirred and allowed to stand to allow cross-linking to proceed to produce the modified polymer. 15 parts of manganese dioxide was then added (in a paste as described below) per hundred parts dry weight of the blend as a curing agent to promote cross-linking between the components of the blend. The material was allowed to cure for seven days at 23°C and 50% relative humidity. Tensile testing of normal dumb-bell-shaped test pieces of the resultant new cross-linked polymer produced the following results :

Example 1.

| MY 720 (parts by weight phr) | Tensile Stress MPa | Tensile Strain per cent |
|---|---|---|
| 0 | 0.25 | 437 |
| 1.0 | 0.65 | 405 |
| 2.5 | 0.78 | 278 |
| 5.0 | 0.79 | 100 |

Example 2.

| Desmodur VL (parts by weight phr) | Tensile Stress MPa | Tensile Strain per cent |
|---|---|---|
| 0 | 0.25 | 437 |
| 1.0 | 0.26 | 621 |
| 2.5 | 0.42 | 441 |
| 5.0 | 0.58 | 176 |
| 7.5 | 0.78 | 116 |
| 10.0 | 0.71 | 44 |

The manganese dioxide paste had the following composition in parts by weight:
Manganese dioxide powder 400
Santiciser 261 (a liquid phosphate plasticiser sold by Monsanto) 500
Robac TMT (an amine catalyst sold by Robinson Bros.) 30